# EUROPÄISCHE PATENTANMELDUNG

(11) **EP 1 388 679 A1**
(43) Veröffentlichungstag der Anmeldung: **11.02.2004**
(21) Anmeldenummer: 03017135.9
(22) Anmeldetag: 29.07.2003
(51) Int. Cl.: F16D 13/58

(54) **Membranfeder für eine Reibungskupplung**

(30) Priorität: 10.08.2002 DE 10236809
(71) Anmelder: ZF Sachs AG, 97424 Schweinfurt (DE)
(72) Erfinder: Pährisch, Martin, Dipl.-Ing., 96103 Hallstadt (DE); Beck, Ronald, Dipl.-Ing. (FH), 97711 Thundorf-Rothhausen (DE); Schraut, Alfred, 97534 Waigolshausen (DE); Ziegler, Erwin, 97535 Gressthal (DE); Hirschmann, Frank, Dipl.-Ing. (FH), 97464 Niederwerrn (DE)

(57) **Zusammenfassung**

Eine Membranfeder für eine Reibungskupplung umfasst einen ringartigen Körperbereich (12) und eine Mehrzahl von in Umfangsrichtung aufeinander folgenden und sich von dem Körperbereich (12) nach radial innen erstreckenden Federzungen (16), wobei im Bereich wenigstens einer Federzunge (16) wenigstens eine langgestreckte Ausformung (22) gebildet ist, welche sich in den radialen Bereich des ringartigen Körperbereichs (12) erstreckt.

## Beschreibung

Die vorliegende Erfindung betrifft eine Membranfeder für eine Reibungskupplung, umfassend einen ringartigen Körperbereich und eine Mehrzahl von in Umfangsrichtung aufeinander folgenden und sich von dem Körperbereich nach radial innen erstreckenden Federzungen.

Derartige in Reibungskupplungen eingesetzte Membranfedern werden im Allgemeinen im radial inneren Endbereich ihrer Federzungen durch einen Ausrückermechanismus beaufschlagt, um durch die vorhandenen Hebelverhältnisse und Abstützung der Membranfeder an einer Gehäuseanordnung der Reibungskupplung eine durch die Membranfeder beaufschlagte Anpressplatte zu entlasten. Da die Membranfedern im Allgemeinen aus Federstahl gebildet sind und somit als inhärentes Charakteristikum eine gewisse federelastische Verformbarkeit aufweisen, treten im Bereich der Federzungen beim Ausrückvorgang, bei welchem gegen die eigene Vorspannung der Membranfeder gearbeitet werden muss, Verformungen auf. Diese mindern bei definiertem Ausrückweg den erreichbaren Abhub der Membranfeder in ihrem die Anpressplatte beaufschlagenden Bereich.

Es ist daher bekannt, in derartigen Tellerfedern in den Federzungen Ausformungen vorzusehen, welche durch Prägen bzw. Umformen des Federstahlrohlings gebildet werden, so dass in den Federzungen sich im Wesentlichen radial erstreckende Sicken bzw. Erhebungen gebildet werden. Um ein Stören mit der Abstützung bezüglich der Gehäuseanordnung bzw. der Anpressplattenanordnung zu vermeiden, weisen diese Ausformungen eine begrenzte Radialerstreckung auf.

Es ist die Aufgabe der vorliegenden Erfindung, eine Membranfeder bzw. eine diese aufweisende Druckplattenbaugruppe für eine Reibungskupplung vorzusehen, bei welcher einer bei Betätigungsvorgängen induzierten Verbiegung der Federzungen der Membranfeder verbessert entgegengewirkt werden kann.

Gemäß einem ersten Aspekt der vorliegenden Erfindung wird diese Aufgabe gelöst durch eine Membranfeder für eine Reibungskupplung, umfassend einen ringartigen Körperbereich und eine Mehrzahl von in Umfangsrichtung aufeinander folgenden und sich von dem Körperbereich nach radial innen erstreckenden Federzungen, wobei im Bereich wenigstens einer Federzunge wenigstens eine langgestreckte Ausformung gebildet ist, welche sich in den radialen Bereich des ringartigen Körperbereichs erstreckt.

Bei der erfindungsgemäßen Membranfeder erstrecken sich also die Ausformungen nicht nur im radialen Bereich der Federzungen, sondern greifen bis in den radialen Bereich des ringartigen Körperbereichs hinein, so dass vor allem im Bereich des Anschlusses der Federzungen an den ringartigen Körperbereich die Federzungen eine erhöhte Steifigkeit aufweisen. Dies ist vor allem daher von Bedeutung, da oftmals in diesem Anschlussbereich die einzelne Federzungen in Umfangsrichtung trennende Aussparungen eine vergrößerte Umfangserstreckung aufweisen und insofern die Federzungen eine verminderte Umfangserstreckung und somit eine verminderte Festigkeit aufweisen.

Hinsichtlich der bei den Membranfederzungen erreichbaren Steifigkeit hat es sich als vorteilhaft erwiesen, wenn eine Materialstärke der Membranfeder außerhalb der wenigstens einen Verformung und eine Materialstärke der Membranfeder im Bereich der wenigstens einen Ausformung, vorzugsweise in einem Ausformungsscheitelbereich, ein Verhältnis A/B im Bereich von 0,7 - 0,9 aufweisen.

Beispielsweise kann vorgesehen sein, dass die wenigstens eine Ausformung sich im Wesentlichen über den ganzen radialen Bereich des ringartigen Körperbereichs erstreckt. Ferner kann eine sehr gute Steifigkeit der Federzungen dadurch realisiert werden, dass die wenigstens eine Ausformung im Bereich des ringartigen Körperbereichs wenigstens zwei in Umfangsrichtung aufeinander folgende Ausformungsabschnitte aufweist.

Gemäß einem weiteren Aspekt der vorliegenden Erfindung betrifft diese eine Druckplattenbaugruppe für eine Reibungskupplung, umfassend eine Gehäuseanordnung sowie eine Anpressplattenanordnung, die mit der Gehäuseanordnung zur gemeinsamen Drehung um eine Drehachse verbunden ist und bezüglich der Gehäuseanordnung in Richtung der Drehachse verlagerbar ist, wobei eine erfindungsgemäße Membranfeder bezüglich der Gehäuseanordnung einerseits und der Anpressplattenanordnung andererseits abgestützt ist.

Da es bei der erfindungsgemäßen Ausgestaltung einer Membranfeder durchaus möglich ist, dass die Ausformung auch in einem radialen Bereich vorhanden ist, in welchem eine Abstützung bezüglich der Gehäuseanordnung oder bezüglich der Anpressplattenanordnung vorgesehen ist, wird vorgeschlagen, dass an derjenigen Baugruppe, an welcher die Membranfeder mit ihrer die wenigstens eine hervorstehende Ausformung aufweisenden Seite abgestützt ist, ein Abstützbereich mit einer die wenigstens eine Ausformung aufnehmenden Aussparung vorgesehen ist.

Alternativ kann einem gegenseitigen Stören der wenigstens einen Ausformung mit einem die Membranfeder abstützenden Bereich dadurch entgegengewirkt werden, dass die Membranfeder bezüglich der Gehäuseanordnung und bezüglich der Anpressplattenanordnung jeweils in einem Bereich abgestützt ist, in welchem keine Ausformung hervorsteht.

Die Abstützung der Membranfeder an der Anpressplattenanordnung kann beispielsweise über eine Verschleißnachstellvorrichtung erfolgen.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Axialansicht einer erfindungsgemäßen Membranfeder;
- Fig. 2: eine Teil-Längsschnittansicht einer die Membranfeder der Fig. 1 aufweisenden Druckplattenbaugruppe;
- Fig. 3: eine Detailschnittansicht der in Fig. 1 gezeigten Membranfeder im Bereich einer Ausformung, geschnitten längs einer Linie III-III in Fig. 1;
- Fig. 4: eine Axialansicht des in der Druckplattenbaugruppe der Fig. 2 eingesetzten Gehäuses;
- Fig. 5: eine der Fig. 2 entsprechende Ansicht einer alternativ aufgebauten Druckplattenbaugruppe;
- Fig. 6: eine Axialansicht der in Fig. 5 eingesetzten Anpressplatte;
- Fig. 7: eine weitere der Fig. 2 entsprechende Ansicht einer alternativ aufgebauten Druckplattenbaugruppe;
- Fig. 8: eine weitere der Fig. 2 entsprechende Ansicht einer alternativ aufgebauten Druckplattenbaugruppe;
- Fig. 9: eine Axialansicht einer Membranfeder gemäß einer alternativen Ausgestaltungsform;
- Fig. 10: eine Axialansicht einer Membranfeder gemäß einer alternativen Ausgestaltungsform.

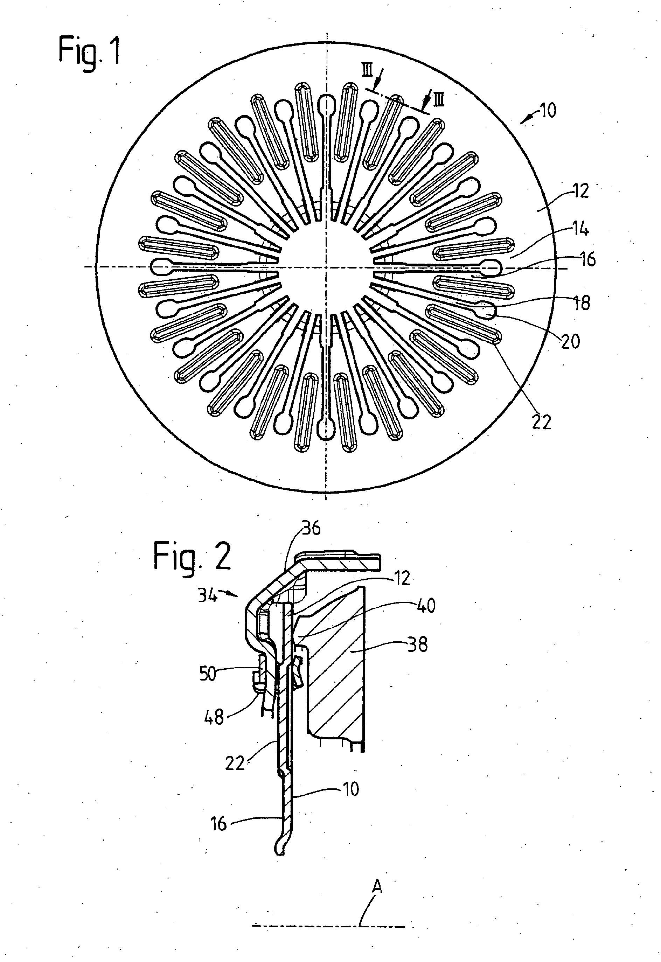

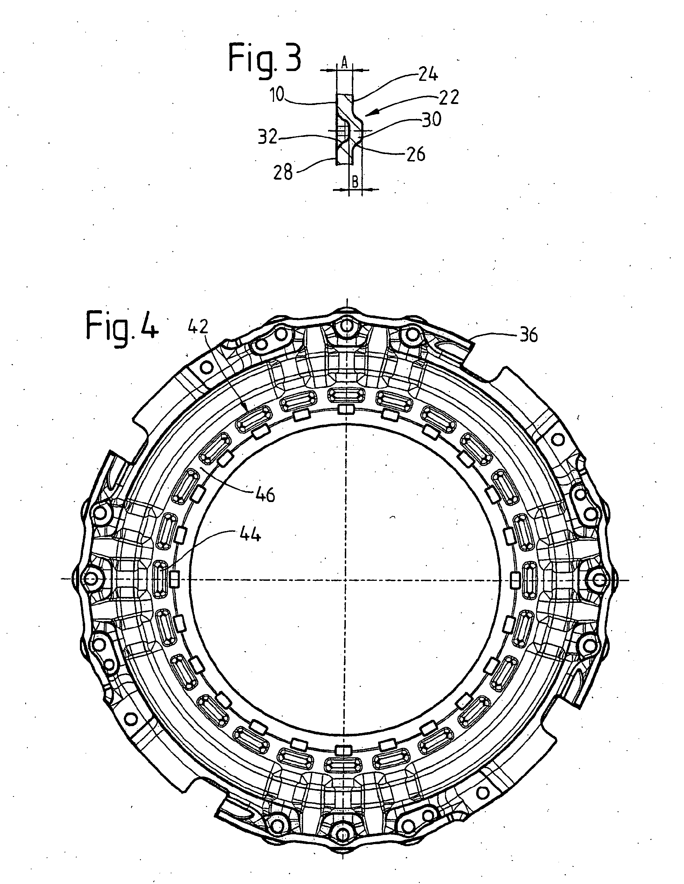

In Fig. 1 ist eine erfindungsgemäße Membranfeder mit 10 bezeichnet. Die Membranfeder 10 weist in ihrem radial äußeren Bereich einen ringartig umlaufenden Körperbereich 12 auf. Im radial inneren Bereich 14 dieses Körperbereichs 12 schließen an diesen in Umfangsrichtung aufeinander folgend mehrere Federzungen 16 an. Die einzelnen Federzungen 16 sind durch Aussparungen 18 voneinander getrennt, die in ihrem radial äußeren Endbereich 20 in Umfangsrichtung erweitert sind, wodurch sich eine Konfiguration ergibt, bei welcher die Federzungen 16 in ihrem an den radial inneren Bereich 14 des Körperbereichs 12 anschließenden Abschnitt in Umfangsrichtung vergleichsweise schmal sind. Bei der in Fig. 1 dargestellten Membranfeder 10 ist im Bereich jeder Federzunge 16 eine Ausformung 22 gebildet. Die Ausformungen 22, die im Allgemeinen durch Umformen eines Stahlblechrohlings für die Membranfeder 10 gebildet werden, bilden somit, wie in Fig. 3 erkennbar, an einer Seite 24 der Membranfeder 10 jeweils eine Erhebung 26, während an der anderen Seite 28 eine sickenartige Einsenkung 32 gebildet ist. Die Ausformungen 22 erstrecken sich bei der erfindungsgemäßen Membranfeder 10 nicht nur im radialen Bereich der Federzungen 16, sondern erstrecken sich über die Federzungen 16 nach radial außen hinaus und in den ringartigen Körperbereich 12 hinein. Bei dem in Fig. 1 dargestellten Ausgestaltungsbeispiel erstrecken sich die im Wesentlichen radial langgestreckten Ausformungen 22 bis in den radial inneren Bereich 14 des ringartigen Körperbereichs 16.

Durch das Bereitstellen dieser Ausformungen 22 wird dafür gesorgt, dass vor allem in demjenigen Bereich, in welchem die Federzungen 16 durch vergleichsweise geringe Materialstärke geschwächt sind, eine Versteifung gebildet wird. Die bei Durchführung von Betätigungsvorgängen im Bereich der Federzungen dann induzierten Verformungen, welche letztendlich einen Verlust an Ausrückweg bzw. einen Verlust an Abhubweg bedeuten, können somit deutlich verringert werden. Es hat sich vor allem gezeigt, dass dann, wenn ein Materialrohling für die Membranfeder 10 zum Bilden der Ausformungen 22 so umgeformt wird, dass die grundsätzlich vorhandene Materialstärke A dieses Materialrohlings und die im Bereich der Ausformungen 22, insbesondere im Scheitelbereich 30 derselben, vorhandene Materialstärke B in einem Verhältnis vom 0,7 - 0,9 stehen, besonders gute Steifigkeitseigenschaften erlangt werden können.

In Fig. 2 ist der erfindungsgemäße Kraftspeicher 10 in eine Druckplattenbaugruppe 34 eingebaut gezeigt. Die Druckplattenbaugruppe 34 umfasst ein Gehäuse 36, in welchem eine Anpressplatte 38 derart aufgenommen ist, dass sie mit dem Gehäuse 36 um eine Drehachse A drehbar, bezüglich des Gehäuses 36 jedoch in Richtung der Drehachse A in begrenztem Wegbereich axial verfagerbar ist. Die Anpressplatte 38 weist einen ringartig oder abschnittartig um die Drehachse A umlaufenden Abstützbereich 40 auf, an welchem die Membranfeder 10 in ihrem radial äußeren Bereich, d.h. mit dem ringartigen Körperbereich 12 abgestützt ist und somit die Anpressplatte 38 beaufschlagt. Radial weiter innen ist der Kraftspeicher 10 bezüglich des Gehäuses 36 abgestützt. Man erkennt in Fig. 4 dieses Gehäuse 36 in Axialansicht. Auch dort'ist ein allgemein mit 42 bezeichneter Abstützbereich für den Kraftspeicher 10 gebildet, welcher eine Mehrzahl von in Umfangsrichtung aufeinander folgenden Abstützvorsprüngen 44 umfasst. Zwischen jeweils zwei Abstützvorsprüngen 44 ist eine Ausnehmung 46 gebildet. In diese Ausnehmungen 46 greifen die Ausformungen 22 des Kraftspeichers 10 ein, so dass die Abstützung des Kraftspeichers 10 bezüglich des Gehäuses 36 im Wesentlichen nur im Bereich der Vorsprünge 44 erfolgt. Auf diese Art und Weise wird trotz der Tatsache, dass die Ausformungen 22 auch in demjenigen Bereich liegen, in welchem der Kraftspeicher 10 bezüglich des Gehäuses 36 abgestützt ist, kein zusätzlicher Bauraum benötigt. Der Kraftspeicher 10 kann am Gehäuse 36 durch ein oder mehrere Klammerelemente 48 gehalten sein, die durch die radial äußeren Bereiche 20 der Aussparungen 18 hindurchgreifen und den Kraftspeicher 10 einerseits und das Gehäuse 36 andererseits hintergreifen. Zwischen den Klammerelementen 48 und dem Gehäuse 36 kann eine Tellerfeder 50 o. dgl. vorgesehen sein, um im Bereich der Abstützung der Membranfeder 10 bezüglich des Gehäuses 36 auftretenden Verschleiß zu kompensieren bzw. auch bei auftretendem Verschleiß für einen festen Zusammenhalt zu sorgen.

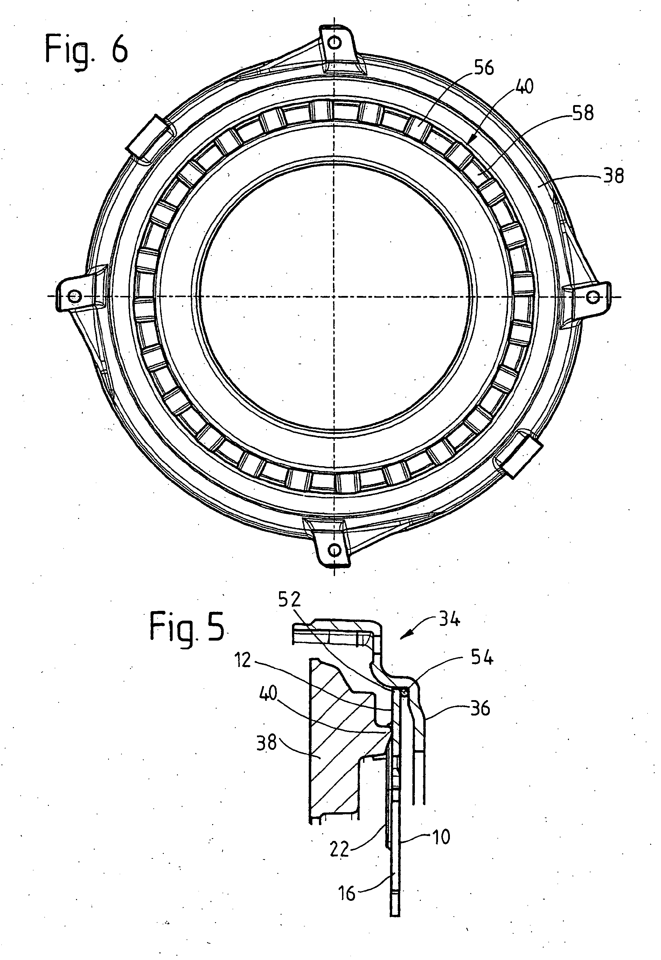

Während bei der vorangehend mit Bezug auf die Fig. 2 und 4 beschriebenen Druckplattenbaugruppe 34 ein Aufbau des gedrückten Typs vorgesehen ist, also ein Aufbau, bei welchem die Federzungen 16 radial innen in drückender Weise beaufschlagt werden, um radial außen den Körperbereich 12 der Membranfeder 10 in Richtung von der Anpressplatte 38 weg zu verschwenken, ist in den Fig. 5 und 6 eine Anordnung gezeigt, bei welcher eine erfindungsgemäße Membranfeder 10 bei einer Druckplattenbaugruppe 34 des gezogenen Typs eingesetzt wird. Hier ist also die Membranfeder 10 im radial äußeren Bereich 52 des Körperbereichs 12 über einen Drahtring 54 o. dgl. am Gehäuse 36 abgestützt, während sie radial weiter innen den Abstützbereich 40 der Anpressplatte 38 beaufschlagt. Diese Anpressplatte 38 ist in Fig. 6 in Axialansicht gezeigt. Man erkennt, dass der Abstützbereich 40 derselben eine Mehrzahl von in Umfangsrichtung aufeinander folgenden Abstützvorsprüngen 56 umfasst, zwischen welchen wieder Ausnehmungen 58 gebildet sind. In diesen Ausnehmungen 58 kommen wieder die an den Federzungen 16 vorgesehenen Ausformungen 22 zu liegen, so dass auch hier die Abstützung im Wesentlichen im Bereich der Vorsprünge 56 und nicht im Bereich der Ausformungen 22 erfolgt. Auch hier ist für eine Anordnung gesorgt, bei welcher die Ausformungen 22 sich in denjenigen Bereich erstrecken, in welchem nunmehr eine Abstützung bezüglicher der Anpressplatte 38 erfolgt, ohne dass dafür jedoch zusätzlicher axialer Bauraum erforderlich wäre.

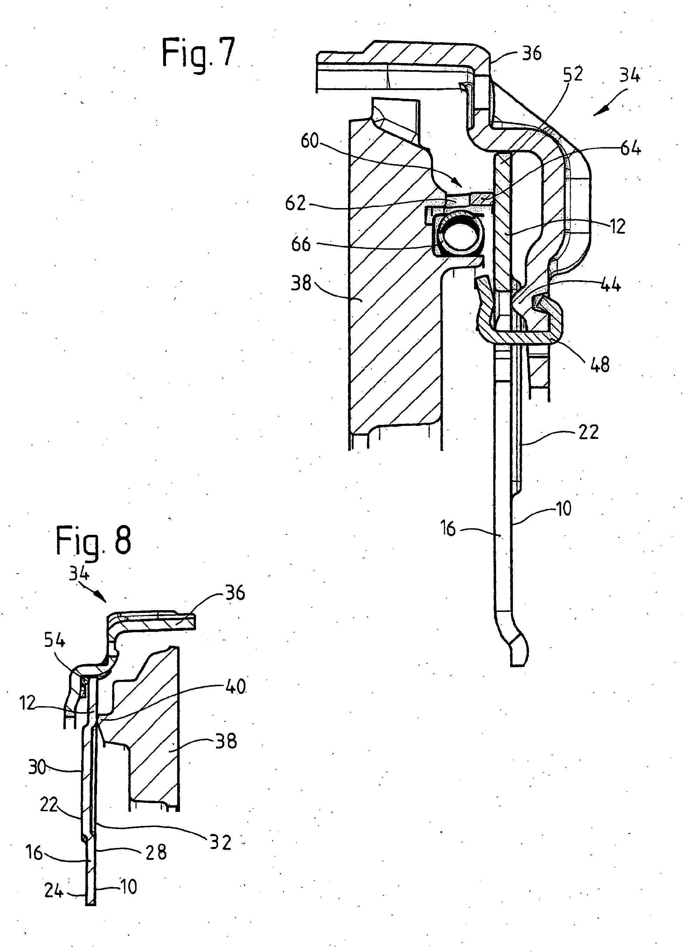

In Fig. 7 ist wiederum eine Druckplattenbaugruppe 34 des gedrückten Typs gezeigt, bei welcher der Kraftspeicher 10 mit seinem Körperbereich 12 radial außen die Anpressplatte 38 über eine Verschleißnachstellvorrichtung 60 beaufschlagt. Die Verschleißnachstellvorrichturig 60 kann von herkömmlichem Aufbau sein und beispielsweise zwei bezüglich einander in Umfangsrichtung verdrehbare Nachstellringe 62, 64 aufweisen, die im Bereich von Keil- bzw. Rampenflächen aneinander anliegen. Zumindest einer der Nachstellringe 62, 64 steht unter Beaufschlagungswirkung einer Vorspannfeder 66, welche diesen zur Drehung in Umfangsrichtung bezüglich des anderen Rings vorspannt. Durch Erfassung des Verschleißes von nicht dargestellten Reibbelägen einer Kupplungsscheibe, beispielsweise durch Erfassung der Axialverlagerung der Anpressplatte 38 bezüglich des Gehäuses 36 oder bezüglich eines nicht dargestellten Schwungrads, wird unter Miteinbeziehung eines ebenfalls nicht dargestellten Spielgebers bei einem Ausrückvorgang den Nachstellringen 62, 64 der Verschleißnachstellvorrichtung 60 eine Relativverdrehung ermöglicht, bis der zuvor vermittels des Spielgebers erfasste Verschleiß kompensiert ist, d.h. die Verschleißnachstellvorrichtung 60 ihre axiale Länge näherungsweise in einem Ausmaß vergrößert hat, in welchem zuvor eine Dickenabnahme der Reibbeläge erkannt worden ist.

Auch bei der in Fig. 7 dargestellten Ausgestaltungsform erkennt man, dass der Kraftspeicher 10 in demjenigen radialen Bereich, in welchem auch die Ausformungen 22 vorgesehen sind, am Gehäuse 36 abgestützt ist, wobei hier wieder die einzelnen Abstützvorsprünge 44 dafür sorgen, dass die Ausformungen 22 in die zwischen diesen Vorsprüngen 44 gebildeten Ausnehmungen eingreifen können.

In Fig. 8 ist eine Ausgestaltungsform einer gezogenen Druckplattenbaugruppe 34 gezeigt. Der Kraftspeicher 10 ist bei der in Fig. 8 dargestellten Druckplattenbaugruppe 34 so eingebaut, dass diejenige Seite 24 desselben, an welcher die Ausformungen 22 Erhebungen 26 bilden, dem Gehäuse 36 zugewandt und von der Anpressplatte 38 abgewandt positioniert ist. Dies bedeutet, dass diejenige Seite 28, an welcher die Ausformungen 22 die in Fig. 3 bereits gezeigten Einsenkungen 32 bilden, der Anpressplatte 38 zugewandt sind. Es ist dann nicht erforderlich, an der Anpressplatte 38 und auch am Gehäuse 36 irgendwelche besonderen Vorkehrungen zu treffen, um ein gegenseitiges Stören mit den Ausformungen 22 bei der Axialkraftabstützung zu vermeiden. Vielmehr kann auch hier an der Anpressplatte 38 ein ringartig durchlaufender Abstützbereich 40 gebildet sein, an welchem dann in den Einsenkungsbereichen 32 kein Anlagekontakt vorhanden ist.

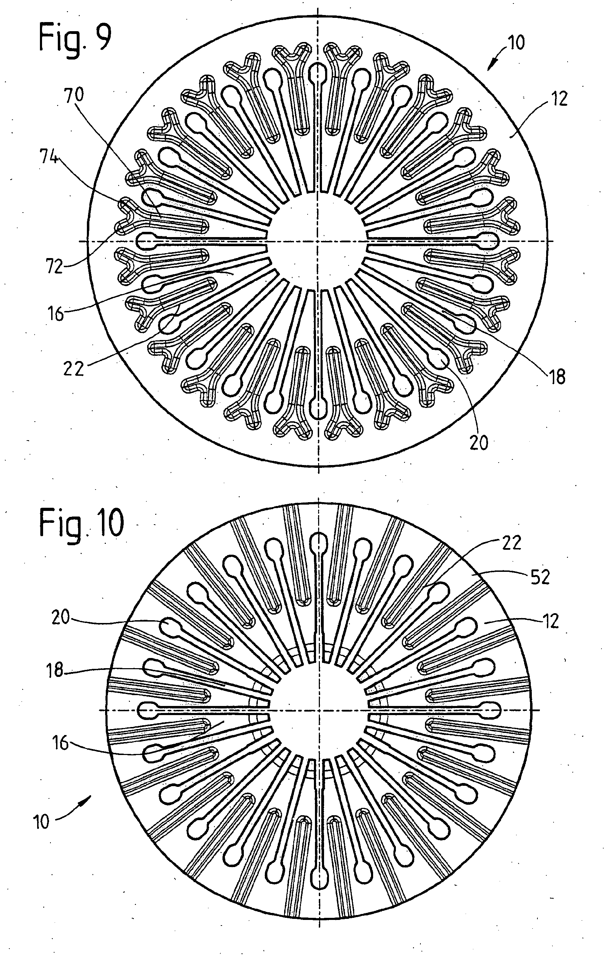

Die Fig. 9 und 10 zeigen noch weitere alternativ ausgestaltete erfindungsgemäße Membranfedern 10. Bei der in Fig. 9 gezeigten Variante weisen die Ausformungen 22 in Axialansicht eine Y-förmige Kontur auf mit einem näherungsweise radial sich erstreckenden Abschnitt 70 im Bereich der Federzungen 16, an welchen radial außen zwei in Umfangsrichtung aufeinander folgende und winkelmäßig zueinander orientierte Abschnitte 72, 74 anschließen. Auch hier erstrecken sich also die Ausformungen 22 bis in den radialen Bereich des ringartigen Körperbereichs 12.

Bei der in Fig. 10 dargestellten Variante sind die Ausformungen 22 nach radial außen bezüglich der in Fig. 1 dargestellten Variante verlängert und erstrecken sind bis zum radial äußeren Bereich 52 des ringartigen Körperbereichs 12, wo sie beispielsweise auch nach radial außen hin offen sein können.

## Patentansprüche

1. Membranfeder für eine Reibungskupplung, umfassend einen ringartigen Körperbereich (12) und eine Mehrzahl von in Umfangsrichtung aufeinander folgenden und sich von dem Körperbereich (12) nach radial innen erstreckenden Federzungen (16), wobei im Bereich wenigstens einer Federzunge (16) wenigstens eine langgestreckte Ausformung (22) gebildet ist, welche sich in den radialen Bereich des ringartigen Körperbereichs (12) erstreckt.

2. Membranfeder nach Anspruch 1,
**dadurch gekennzeichnet, dass** eine Materialstärke (A) der Membranfeder (10) außerhalb der wenigstens einen Verformung und eine Materialstärke (B) der Membranfeder (10) im Bereich der wenigstens einen Ausformung (22), vorzugsweise in einem Ausformungsscheitelbereich, ein Verhältnis A/B im Bereich von 0,7 - 0,9 aufweisen.

3. Membranfeder nach Anspruch 1 oder 2,
**dadurch gekennzeichnet, dass** die wenigstens eine Ausformung (22) sich im Wesentlichen über den ganzen radialen Bereich des ringartigen Körperbereichs (12) erstreckt.

4. Membranfeder nach einem der Ansprüche 1 bis 3,
**dadurch gekennzeichnet, dass** die wenigstens eine Ausformung (22) im Bereich des ringartigen Körperbereichs (12) wenigstens zwei in Umfangsrichtung aufeinander folgende Ausformungsabschnitte (72, 74) aufweist.

5. Druckplattenbaugruppe für eine Reibungskupplung, umfassend eine Gehäuseanordnung (36) sowie eine Anpressplattenanordnung (38), die mit der Gehäuseanordnung (36) zur gemeinsamen Drehung um eine Drehachse (A) verbunden ist und bezüglich der Gehäuseanordnung (36) in Richtung der Drehachse (A) verlagerbar ist, wobei eine Membranfeder (10) nach einem der vorangehenden Ansprüche bezüglich der Gehäuseanordnung (36) einerseits und der Anpressplattenanordnung (38) andererseits abgestützt ist.

6. Druckplattenbaugruppe nach Anspruch 5,
**dadurch gekennzeichnet, dass** an derjenigen Baugruppe, an welcher die Membranfeder (10) mit ihrer die wenigstens eine hervorstehende Ausformung (22) aufweisenden Seite (24) abgestützt ist, ein Abstützbereich (40, 42) mit einer die wenigstens eine Ausformung (22) aufnehmenden Aussparung (58) vorgesehen ist.

7. Druckplattenbaugruppe nach Anspruch 5,
**dadurch gekennzeichnet, dass** die Membranfeder (10) bezüglich der Gehäuseanordnung (36) und bezüglich der Anpressplattenanordnung (38) jeweils in einem Bereich abgestützt ist, in welchem keine Ausformung (22) hervorsteht.

8. Druckplattenbaugruppe nach einem der Ansprüche 5 bis 7,
**dadurch gekennzeichnet, dass** die Membranfeder (10) bezüglich der Anpressplatte (38) über eine Verschleißnachstellvorrichtung (60) abgestützt ist.
